# Europäisches Patentamt
## European Patent Office
## Office européen des brevets

(19)

(11) Veröffentlichungsnummer: **0 178 640**
**B1**

(12) # EUROPÄISCHE PATENTSCHRIFT

(45) Veröffentlichungstag der Patentschrift:
**24.05.89**

(51) Int. Cl.⁴: **B 21 D  28/04, B 23 D  27/00**

(21) Anmeldenummer: **85113099.7**

(22) Anmeldetag: **16.10.85**

(54) **Stanzmaschine und Verfahren durchgeführt mit dieser Stanzmaschine.**

(30) Priorität: **18.10.84  US 662132**

(43) Veröffentlichungstag der Anmeldung:
**23.04.86 Patentblatt 86/17**

(45) Bekanntmachung des Hinweises auf die Patenterteilung:
**24.05.89 Patentblatt 89/21**

(84) Benannte Vertragsstaaten:
**CH DE FR GB IT LI**

(56) Entgegenhaltungen:
**DE-A- 3 020 532**
**DE-C- 909 651**
**FR-A- 858 107**
**US-A- 3 370 492**

(73) Patentinhaber: **Trumpf GmbH & Co,**
**Postfach 1320 Johann-Maus-Strasse 2,**
**D-7257 Ditzingen (DE)**

(72) Erfinder: **Bitzel, Hubert, Dr.-Ing., Mozartweg 5,**
**D-7257 Ditzingen 5 (DE)**

(74) Vertreter: **Patentanwälte Dipl.-Ing. B. Schmid Dr.-Ing.**
**G.A. Birn Dipl.-Ing. H. Quarder, Falbenhennenstrasse 17,**
**D-7000 Stuttgart 1 (DE)**

## Beschreibung

Die Erfindung bezieht sich auf eine Stanzmaschine mit einem wenigstens zweiteiligen Stanzwerkzeug, dessen Teile synchron um die Werkzeuglängsachse drehbar sind und mit einer X-Y-Verschiebevorrichtung für das Werkstück sowie einem drehbar gelagerten Matrizenhalter. Eine derartige Stanzmaschine ist durch die DE-OS 30 20 532 bekannt geworden. Es handelt sich hierbei um eine sogenannte Revolverstanze mit zwei konzentrischen, übereinander angeordneten Revolvertellern, wobei der obere die Stanzstempel und der untere die zugehörigen Matrizen des wenigstens zweiteiligen Stanzwerkzeugs aufnimmt. Jeder Stanzstempel und auch jede Matrize sind mit einem separaten Drehantrieb verbunden. Infolgedessen können beide synchron um die geometrische Stanzwerkzeugachse gedreht werden. Hierdurch ist es möglich, mit einem Stanzstempel einer ganz bestimmten Schneidenform Ausstanzungen anderer Form und Grösse auszustanzen, indem man das Werkstück gegenüber dem Stanzwerkzeug verschiebt und, soweit erforderlich, die notwendige Drehung des Stanzwerkzeugs zwischen zwei Stanzhüben vornimmt.

Sowohl der Aufwand beim Herstellen der Stanzwerkzeuge als auch bei deren Drehung ist verhältnismässig hoch. Mit Ausnahme eines gemeinsamen Antriebsmotors bedarf jedes Werkzeugteil eines eigenen Getriebes und einer Kupplungshälfte. Die Werkzeugteile müssen mit Halteelementen, beispielsweise einer Halteplatte, ausgestattet sein. Insofern kann man keine üblichen Stanzstempel und Matrizen verwenden. Der Übergang von einem Werkzeug zum nächstfolgenden erfolgt durch Drehen des Revolvers um einen vorbestimmten Winkel, wodurch der Stanzstempel in den Arbeitsbereich eines antreibbaren Hammers gelangt. Die Kapazität dieses Revolvers ist durch seine Grösse und diejenige der Stanzwerkzeuge einschliesslich ihres Antriebs festgelegt.

Die Aufgabe der Erfindung besteht infolgedessen darin, eine Stanzmaschine der eingangs beschriebenen Art so weiterzubilden, dass sich der für das Drehen des Stanzwerkzeugs erforderliche Aufwand reduzieren lässt, die gleichen Werkzeuge verwenden lassen, die man auch bei herkömmlichen Stanzmaschinen ohne drehbares Stanzwerkzeug kennt, wobei der automatische Übergang von einem Werkzeug zum nächstfolgenden sowie die Möglichkeit, gerade und/oder gebogene Konturen erstellen zu können, erhalten bleiben.

Zur Lösung dieser Aufgabe wird erfindungsgemäss vorgeschlagen, dass die Stanzmaschine gemäss dem Oberbegriff des Anspruchs 1 dadurch gekennzeichnet ist, dass der Stanzmaschinen-Stössel oder ein Teil desselben drehbar gelagert und das Stanzwerkzeug mittels eines automatischen Werkzeugwechslers in die Werkzeugaufnahme des Stössels bzw. den einzigen Matrizenhalter wechselbar ist. Weil nunmehr die Stanzmaschine lediglich einen einzigen Matrizenhalter und auch eine einzige Aufnahme für den Stanzstempel aufweist, wobei sich letzterer in bekannter Weise im Stössel befindet, ist auch nur noch ein einziger Drehantrieb für alle nacheinander zu verwendenden Stanzwerkzeuge erforderlich. Andererseits können aber die Werkzeugaufnahmen für den Stanzstempel einerseits und die Matrize andererseits von herkömmlicher Art sein, was die Verwendung von Stanzstempeln und Matrizen üblicher Bauart ermöglicht. Die Werkzeugteile können in der bei Stanzmaschinen mit nicht drehbarem Stanzwerkzeug üblichen Weise ein- und ausgewechselt werden, so dass man auch hinsichtlich der Wechselvorrichtung keine besonderen Vorkehrungen treffen muss bzw. die bekannte Wechselvorrichtung benutzt werden kann. Bei einem zweiteiligen Stössel ist der das Werkzeug unmittelbar tragende Stösselteil selbstverständlich der drehbare.

Weil das Werkstück mittels eines X-Y-Vorschubs, also einer Vorschubvorrichtung mit einer Verschiebemöglichkeit in X-Richtung einerseits und Y-Richtung andererseits, wobei die beiden Bewegungen bekanntlich überlagert werden können, innerhalb der Blechebene beliebig verschoben werden kann, lassen sich komplizierte Innen- und Aussenkonturen beschleunigt und auf einfache Weise herstellen, wenn man sich die Drehbarkeit des Werkzeugs um seine Längsachse zunutze macht und gleichzeitig Stanzwerkzeuge mit speziell geformter Schneidkante verwendet. Es kommt noch hinzu, dass sich bei dieser Kombination die Stanzkraft wesentlich verringern lässt. Der Stanzstempel sollte wenigstens eine gerade und mindestens eine bogenförmige Schneidkante aufweisen. Bei der Erstellung eines bestimmten Teils einer Innen- oder Aussenkontur wird das Werkzeug jeweils so gedreht, dass entweder mit der oder einer der geraden oder mit der oder einer bogenförmigen Schneidkante geschnitten wird. Die gerade Schneidkante dient in erster Linie zur Erstellung gerader Konturenteilstücke, während man die gebogene Schneidkante zweckmässigerweise zum Herstellen bogenförmiger Werkstückkanten bzw. Konturteilstücke verwendet. Beim Übergang von einer geraden Werkstückkante zu einer bogenförmigen wird nicht nur das Werkstück entsprechend weiterbewegt, sondern zwischen zwei Hüben das Werkzeug so gedreht, dass nach dem letzten Stanzhub mit der geraden Schneidkante nunmehr die bogenförmige schneidet oder umgekehrt. Wenn beispielsweise die bogenförmige Kante einen konstanten Radius hat, so kann man damit kreisbogenförmige Werkstückkanten der Konturteilstücke erstellen, deren Länge ein Mehrfaches der entsprechenden Bogenlänge der betreffenden Schneidkante entspricht. Dabei reichen unter Umständen wenige Hübe aus, um eine relativ lange bogenförmige Werkstückkante zu erstellen. Dadurch lässt sich die Herstellung eines Ausschnitts in einer Blechtafel od.dgl. oder eine Aussenkontur ohne zusätzlichen Leistungsbedarf enorm beschleunigen.

Selbstverständlich wird beim Drehen des Stanzstempels die Matrize jeweils synchron in gleichem Sinne gedreht. Die Aufnahme des Matrizenhalters kann aber trotzdem in herkömmlicher Weise gestaltet sein, so dass die Matrize aussen keiner besonderen Formgebung und auch keines besonderen Ansatzes od.dgl. bedarf.

Eine weitere Ausgestaltung der Erfindung besteht darin, dass die gerade und die bogenförmige Schneidkante oder gedachte Verlängerungen desselben einen spitzen Winkel einschliessen. Aufgrund des letzteren lassen sich mit diesem Stanzwerkzeug und seiner Drehmöglichkeit Innenecken mit kleinem Winkel leicht ausstanzen. Wenn allerdings nur gedachte Verlängerungen der bogenförmigen und der geradlinigen Schneidkante diesen spitzen Winkel bilden, so entsteht eine Schneidenform, welche keine derartige messerähnliche Schneidenspitze besitzt. Diese ist dann zum Ausstanzen von spitzen Innenecken nicht geeignet, dafür aber zum Bearbeiten bzw. Herstellen anders geformter Werkstücke. Mit anderen Worten, die Schneidwerkzeuge können nunmehr den entsprechenden Erfordernissen gemäss entwickelt und hergestellt werden.

Eine weitere Variante der Erfindung mit zwei winklig, insbesondere rechtwinklig zueinander verlaufenden Schneidkanten, die über die bogenförmige miteinander verbunden sind, kennzeichnet sich dadurch, dass die bogenförmige Schneide aus wenigstens zwei Teilkanten besteht, von denen mindestens eine kreisbogenförmig ist. Ein im wesentlichen nur eine bogenförmige und eine geradlinige Schneidkante aufweisende Schneidwerkzeug hat gemäss der Zeichnung und der zugehörigen Beschreibung beispielsweise die Form oder Querschnittsform eines Tragflügelprofils. Man kann die spitze Ecke rechtwinklig abschneiden, so dass eine Querschnittsform entsteht, wie sie die Zeichnung zeigt. Mit der kreisförmigen Teilkante lassen sich insbesondere kreisförmige oder kreisbogenförmige Konturen gleichen Halbmessers erstellen, während mit der lediglich bogenförmigen Teilkante andere konkav gewölbte Aussenkonturen oder auch entsprechende Innenkonturen erstellen lassen. Es wird also nur jeweils ein bestimmtes Teilstück der gesamten Schneide dieses Stanzstempels und der Matrize benützt.

Die Erfindung wird nachstehend anhand der Zeichnung näher erläutert.

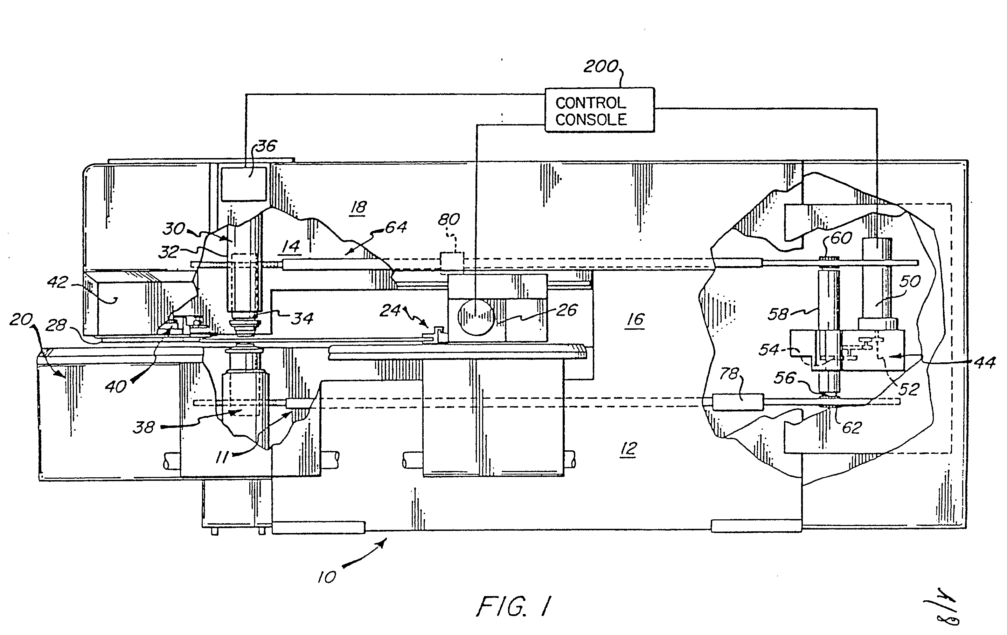

Fig. 1 zeigt eine schematische, teilweise aufgebrochene Seitenansicht der Stanzmaschine,

Fig. 2 ist ein Teilausschnitt der Fig. 1 in vergrössertem Massstab, wobei Teile schematisch dargestellt sind,

Fig. 3 zeigt einen Ausschnitt der Stanzmaschine in einer Schrägansicht,

Fig. 4 ist eine abgebrochene Seitenansicht eines Stempels,

Fig. 5 ist die Unteransicht von Fig. 4,

Fig. 6 ist die Draufsicht einer Matrize, die zusammen mit dem Stempel nach Fig. 4 verwendet wird,

Fig. 7 ist ein Querschnitt des Stempels von Fig. 4 in vergrössertem Massstab,

Fig. 8 ist der Querschnitt einer zweiten Ausführungsform des Stempels,

Fig. 9 ist die Draufsicht auf ein Werkstück, wobei die Herstellung eines kreisförmigen Ausschnittes schematisch dargestellt ist,

Fig. 10 bis 15 zeigen die einzelnen Schritte bei der Herstellung des Ausschnittes nach Fig. 9,

Fig. 16 zeigt die Draufsicht eines von Geraden und Bögen begrenzten Werkstückes, wobei die Stellungen des Stanzstempels bei der Herstellung des Werkstückes eingezeichnet sind und ein Stempel nach Fig. 4 verwendet wird,

Fig. 17 zeigt ein weiteres Werkstück, das mit einem Stempel nach Fig. 8 hergestellt wurde,

Fig. 18a zeigt schematisch zwei Stellungen eines kreisrunden Stanzstempels beim Bearbeiten einer geraden Kante,

Fig. 18b zeigt schematisch zwei Stanzstempelstellunen beim Bearbeiten einer kreisförmigen Kontur mit einem kreisrunden Stanzstempel,

Fig. 19a zeigt eine kreisförmige Ausstanzung,

Fig. 19b zeigt zwei sich überlappende Ausstanzungen beim Bearbeiten der kreisförmigen Ausstanzung nach Fig. 19a, schematisch,

Fig. 19c zeigt eine der Fig. 19b entsprechende Darstellung mit Stellungen eines Stanzstempels nach Fig. 4, schematisch,

Fig. 20 zeigt den Querschnitt einer weiteren Ausführungsform eines Stanzstempels,

Fig. 21 ist die Ansicht eines Werkstückes mit geraden und bogenförmigen Konturenteilen, das mit einem Stempel nach Fig. 20 bearbeitet wurde, wobei die einzelnen Stellungen des Stempels beim Herstellen der Kontur eingetragen sind.

Die Stanzmaschine hat einen C-förmigen Rahmen 10, der aus einem Unterteil 12, einem Querhaupt 14 und einem Verbindungsstück 16 besteht. Die Maschine ist allseitig mit Blechabdeckungen 18 versehen. Der Arbeitstisch 20 stützt sich am Unterteil 12 des Rahmens 10 ab. Die Werkstückhaltevorrichtung 24 ist in Richtung der X- und der Y-Achse verschiebbar. Die Antriebe hierzu befinden sich im Antriebsgehäuse 26. Auf diese Weise kann das Werkstück 28 auf dem Arbeitstisch 20 gegenüber dem Querhaupt 14 in X- und Y-Richtung verschoben werden. Am vorderen Ende des Querhauptes 14 ist eine Stösseleinrichtung 30 mit einem Stösseloberteil 32 und einem auf- und abbewegbaren Stösselunterteil 34. Der Stösselantrieb 36 ist schematisch dargestellt. Der Matrizenhalter 38 befindet sich im Unterteil 12 des Rahmens 10. Ein automatischer Werkzeugwechsler 40 befindet sich im Wechslergehäuse 42. Eine Rotationseinrichtung 44 für die Drehung des Stösselunterteils 34 und des Matrizenhalters 38 befindet sich im Inneren des Rahmens 10. Die Rotationseinrichtung 44 enthält einen Motor 50, der in beiden Drehrichtungen arbeitet. Die Drehbewegung des Motors 50 wird über ein Getriebe 52 auf das Antriebsrad 54 der Welle 56 übertragen. Die Welle 56, die in der Lagerung 58 angeordnet ist, hat an beiden Enden je ein Antriebsrad 60 und 62. Diese beiden Antriebsräder 60 und 62 arbeiten mit Zahnstangen 63, die auf einer oberen Stange 64 und einer unteren Stange 66 angeordnet sind, zusammen. Zumindest die untere Stange 66 enthält ein einstellbares Kupplungsstück 78, um Längenunterschiede auszugleichen Die in Führungen 80 gelagerten Stangen 64 und 66 greifen mit ihren verzahnten Enden in Antreibsräder 70 und 72 des Stösselunterteils 34 bzw. des Matrizenhalters 38. Das Stösselunterteil 34 der Stösseleinrichtung 30 hat einen hydraulischen Spannmechanismus 74, der den Einspannzapfen 76 des Stempels 82 festhält, wenn der Zylinderraum 84 mit Öl beaufschlagt wird. Genau so wird der Abstreiferhalter 86 für den Abstreifer 90 durch den Kolben 88 gehalten, wenn der Zylinderraum 92 mit Öl beaufschlagt wird. Der Matrizenhalter 38 hat ebenfalls einen hydraulischen Einspannmechanismus 94, um die Matrize 96 in dem Matrizenhalterblock 98 festzuhalten, wenn der Zylinderraum 100 mit Öl beaufschlagt wird.

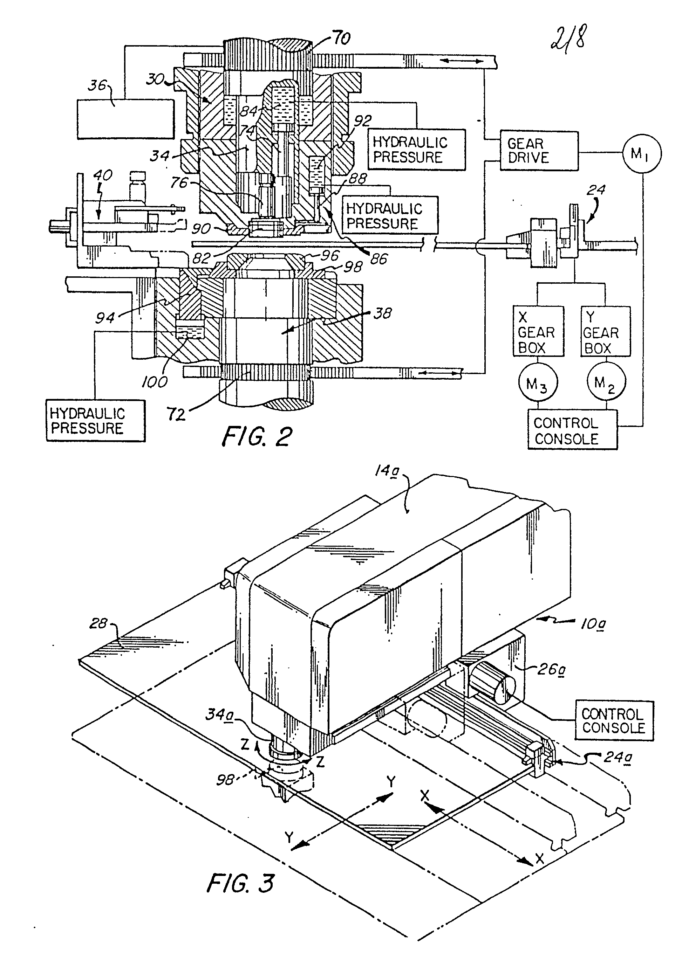

Der schematisch dargestellte Stösselantrieb 36 für das Stösselunterteil 34 kann aus einer mechanischen Einrichtung mit einem Kurbel oder Exzenterantrieb oder auch aus einer hydraulischen Einrichtung mit einer Kolben-Zylinderanordnung bestehen. Bei Stanzmaschinen mit einem halbautomatischen Werkzeugwechsel, wie in Fig. 3 dargestellt, werden die Werkzeuge von Hand mit einer nicht dargestellten Kassette in die Werkzeugaufnahmen gebracht. Zwischen dem Stösselunterteil 34a und dem Matrizenhalteblock 98 ist das Werkstück 28 über die Werkstückhaltevorrichtung 24a in den beiden Richtungen X und Y verschiebbar.

Der Stempel 82 hat einen Einspannzapfen 76, einen Grundkörper 104, eine Schneidzone 106 und ein Zwischenteil 108. Die abgeschrägte Schneidzone 106 hat eine Längsausdehnung von der Länge L. Die Schneidkante $A^1$ ist bogenförmig und bestimmt durch den Radius $R^1$. Die andere Schneidkante $A^2$ ist gerade und schneidet die bogenförmige Schneidkante $A^1$ unter Bildung eines spitzen Endes. An dem gegenüberliegenden Ende sind die Schneidkanten $A^1$ und $A^2$ über eine Schneidkante $A^3$ verbunden. Die Schneidkante $A^3$ ist auch bogenförmig und durch einen Radius $R^3$ bestimmt, wobei der Radius $R^3$ wesentlich kleiner ist als der Radius $R^1$. Die durch die Schneidkanten $A^1$, $A^2$ und $A^3$ bestimmte Form hat das Aussehen eines Tragflügels oder einer Träne. Die grösste Breite W des Querschnitts wird von den beiden Punkten am Übergang der Schneidkanten $A^1$ bzw. $A^2$ in die Schneidkante $A^3$ bestimmt. Die grösste Breite W ist kleiner als die halbe Länge L und vorzugsweise sogar kleiner als 0,4 L. Mit $S^1$, $S^2$ und $S^3$ sind die Schneidlängen der Schneidkanten $A^1$, $A^2$ und $A^3$ bezeichnet. Die Matrize 96 hat eine Öffnung 110, die entsprechend der Form der Schneidzone 106 des Stempels 82 ausgebildet ist.

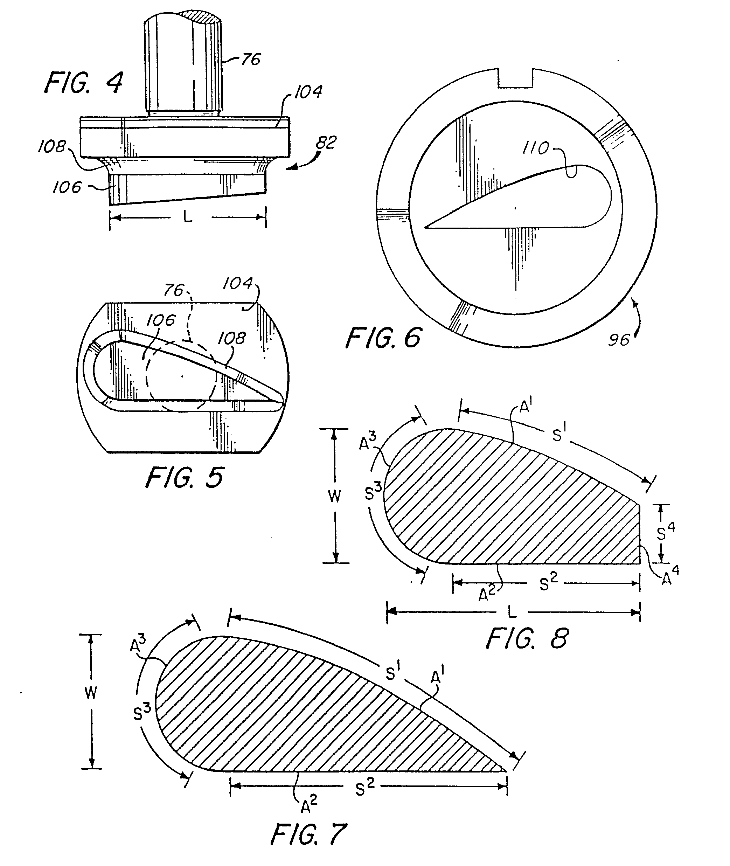

Der Stempel nach Fig. 8 ist ähnlich dem in Fig. 7, jedoch ist die spitz zulaufende Ecke durch eine zu $A^2$ rechtwinklig verlaufende gerade Schneidkante $A^4$ abgeschnitten.

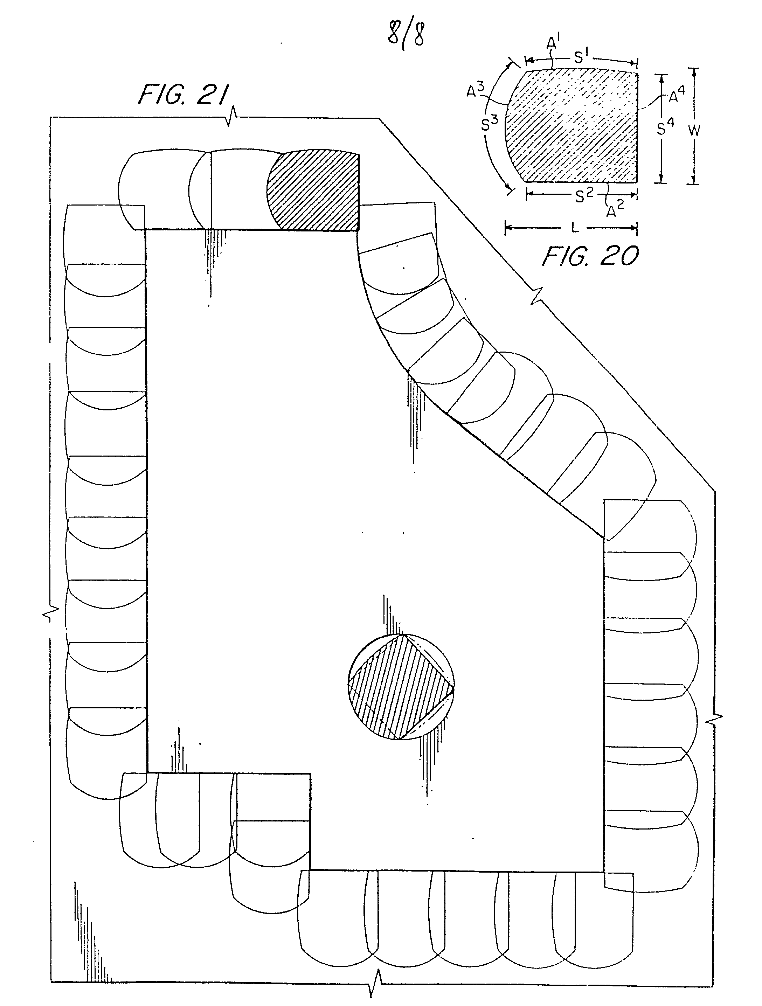

Beim Stempel nach Fig. 20 mündet die Schneidkante $A^1$ nicht tangential in die Schneidkante $A^3$. Dieser Stempelquerschnitt ähnelt einem Quadrat, bei dem zwei Quadratseiten ($A^1$ und $A^3$) unterschiedlich bogenförmig ausgebildet sind.

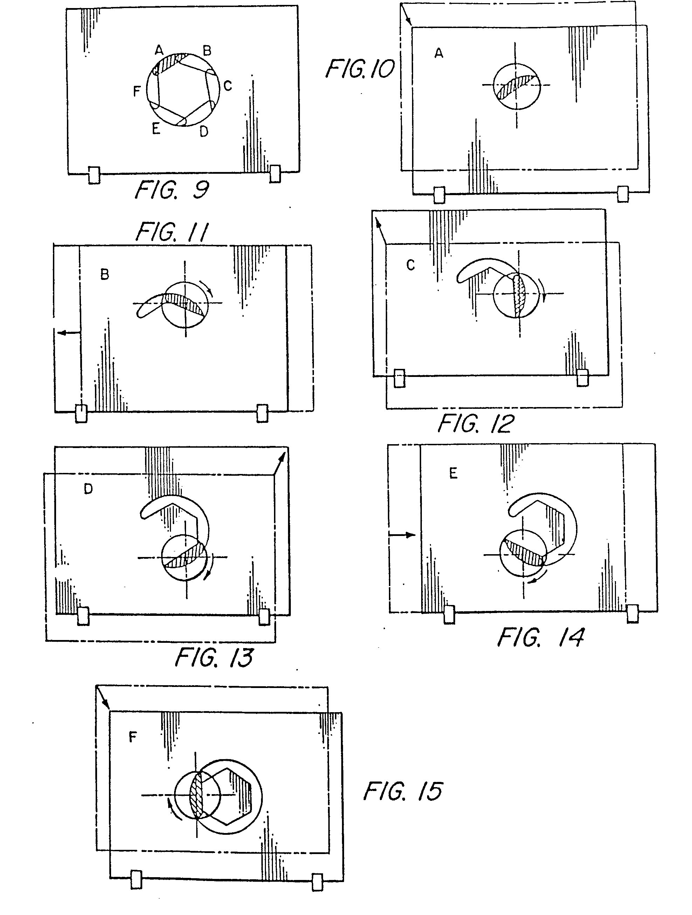

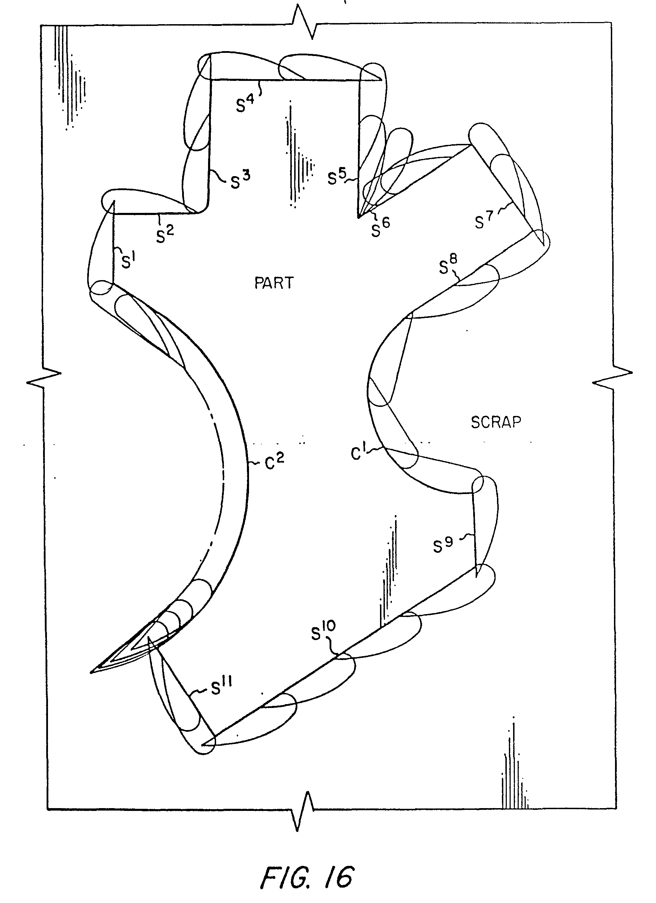

Die Herstellung eines kreisförmigen Ausschnitts nach Fig. 9 erfolgt beispielsweise in sechs Schritten. Fig. 10 zeigt die Herstellung der Ausstanzung A, nachdem das Werkstück von der Anfangsstellung (strichpunktiert) in die entsprechende Position gefahren wurde. Danach wird das Werkstück längs der X-Achse verschoben und Stempel sowie Matrize werden zusammen um 60° verdreht. Danach kann die Ausstanzung B gestanzt werden. Fig. 12 zeigt die Verschiebung des Werkstücks in die neue Position, wobei Stempel und Matrize um weitere 60° gedreht werden. Danach kann die Ausstanzung C hergestellt werden. Die Durchführung der drei weiteren Stanzhübe erfolgt sinngemäss. Bei diesem Beispiel wurde ein Stempel ausgewählt mit einer Schneidkante $A^1$, dessen Radius $R^1$ genauso gross ist wie der Radius des herzustellenden Ausschnittes. Da die Schneidkante $S^1$ länger ist als ein Sechstel des Kreisumfanges überschneiden sich die Ausstanzungen an beiden Enden.

Beim Werkstück nach Fig. 16, das verschiedene gerade und bogenförmige Konturteile aufweist, wird ein Stempel nach den Figuren 4, 5 und 7 sowie eine zugehörige Matrize nach Fig. 6 verwendet. Für die Herstellung des kurvenförmigen Randes $C^1$ sind nur wenige Stanzhübe erforderlich, da das Werkzeug zumindest ähnlich gekrümmt ist wie das herzustellende Konturteil.

Bei der Herstellung des kurvenförmigen Randes $C^2$, dessen Radius grösser ist als der Radius $R^1$ des Stempels, muss der Vorschubschritt zwischen den einzelnen Stanzhüben wesentlich kleiner gewählt werden, um eine möglichst glatte Kante zu erreichen. Die geraden Konturteile des Werkstückes $S^1$ bis $S^7$ können mit wenigen Hüben mit der geradlinigen Schneidkante $A^2$ des Stempels erstellt werden. Dabei bilden vorspringende Ecken wie zwischen $S^1$ und $S^2$, $S^3$ und $S^4$, $S^6$ und $S^7$ oder $S^7$ und $S^8$ keine Schwierigkeiten. Der kleine Radius der Schneidkante $A^3$ wird benutzt, um entsprechend kleine Radien an einspringenden Ecken herzustellen, wie etwa zwischen den Konturteilen $S^2$ und $S^3$. Die spitze Ecke des Stempels wird generell bei Innenecken mit geringem Winkel benutzt. Dies ist bei der Herstellung der Ecke zwischen den Konturteilen $S^5$ und $S^6$ der Fall.

Gemäss der Erfindung kann ein derartiges Werkstück mit nur wenigen Stanzhüben und ohne Werkzeugwechsel hergestellt werden.

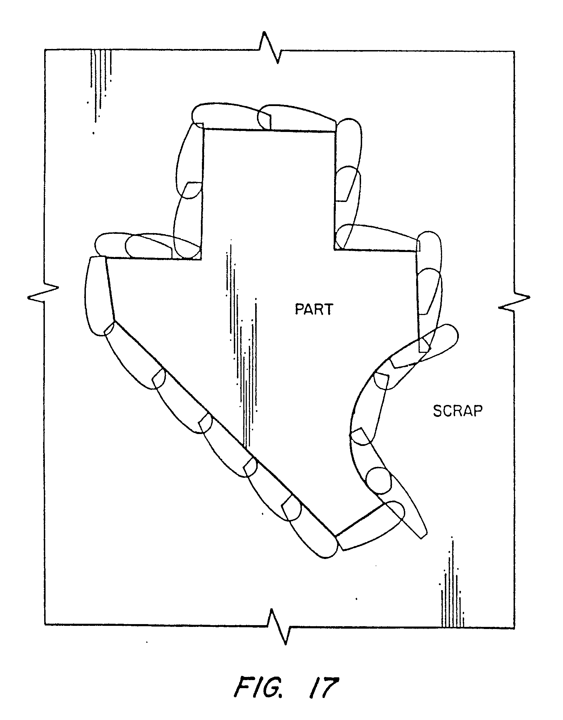

Ein Werkzeug nach Fig. 8 hat dann Vorteile, wenn rechtwinklige Innenecken hergestellt werden sollen, wie in Fig. 17 gezeigt.

Ein Stempel mit dem Querschnitt nach Fig. 20 hat den Vorteil, dass mit ihm (aber nicht nur mit ihm) auch kleine Innenausschnitte hergestellt werden können. Für die Herstellung des gezeigten kreisförmigen Ausschnitts sind nur vier Stanzhübe erforderlich. Da die Schneidkanten $A^2$ und $A^4$ rechtwinklig zueinander angeordnet sind, können sehr einfach rechteckige Innenausschnitte oder rechtwinklige Ecken hergestellt werden. Die Schneidkante A$^1$ eignet sich für die Herstellung von konkaven Berandungen mit grossen Radius.

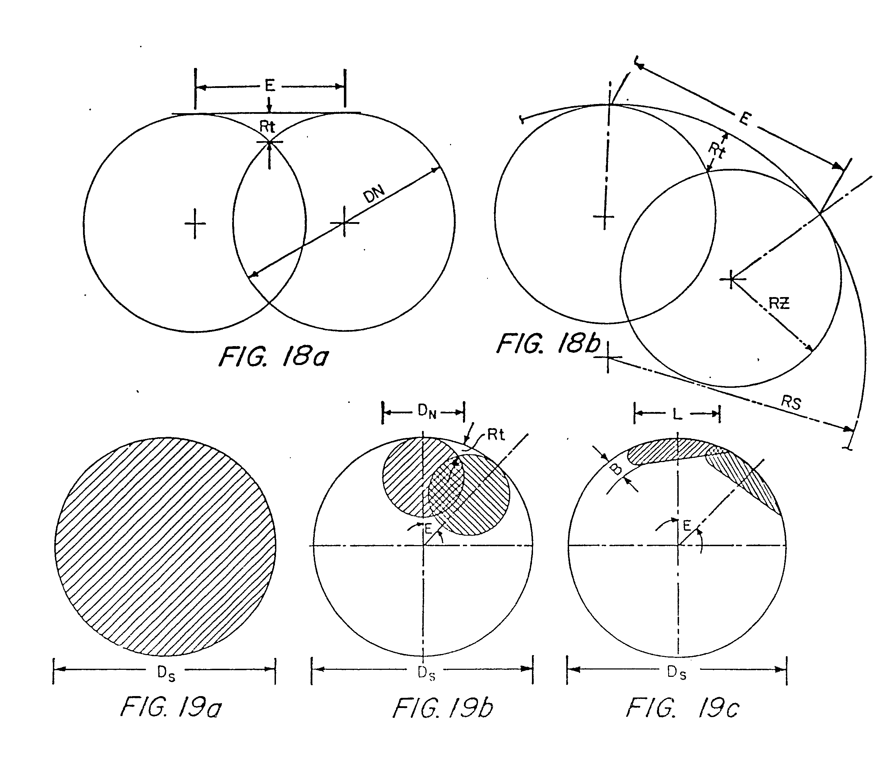

Die Vorteile der Erfindung werden auch anhand der Fig. 19 erläutert. Um einen kreisförmigen Ausschnitt mit einem Stempel gleichen Durchmessers herzustellen, benötigt man eine Stanzkraft nach der Formel:

$$F = D_s \cdot \pi \cdot S \cdot T_s$$

Dabei bedeutet $D_s$ den Durchmesser des gewünschten Ausschnitts, S die Werkstückdicke, $T_s$ die Scherfestigkeit des Materials. Wenn der Durchmesser des gewünschten Ausschnitts 600 mm beträgt, die Materialdicke 2,5 mm und die Scherfestigkeit 320 Newton pro mm$^2$, so ist die erforderliche Stanzkraft 150 Tonnen. Da Stempeldurchmesser und Ausschnittdurchmesser identisch sind, ist die Rauhigkeit $R_t$ gleich Null. Da solche Stanzkräfte nicht immer zur Verfügung stehen, ist es erforderlich, einen derartigen Ausschnitt durch mehrere Stanzhübe mit kleinerem Stanzdurchmesser herzustellen. Da die Vorschübe die Rauhheit bestimmen und nur eine gewisse Rauhheit zulässig ist, ist der maximale Vorschubschritt zwischen den Stanzhüben festgelegt. Wird der Ausschnitt mit 600 mm Durchmesser mit einem Stanzstempel von 50 mm Durchmesser ($D_n$) hergestellt, wobei zur Erzielung einer noch zulässigen Rauhheit ein Vorschubschritt von 6,5 mm gewählt wird, so sind noch 12,6 Tonnen Stanzkraft und 285 Hübe notwendig. Die Verwendung der erfindungsgemässen Maschine mit einem drehbaren Werkzeug mit einem Radius $R^1$ von 300 mm und einer Querschnittsbreite (B) von 12 mm erfordert nur eine Stanzkraft von 8,6 Tonnen und nur 45 Hübe, um den gewünschten Ausschnitt herzustellen. Dabei ist die Rauhigkeit gleich Null, weil ja der Schneidradius mit dem Ausschnittradius übereinstimmt.

## Patentansprüche

1. Stanzmaschine mit einem wenigstens zweiteiligen Stanzwerkzeug (82, 90, 96), dessen Teile synchron um die Werkzeuglängsachse drehbar sind und mit einer X-Y-Verschiebevorrichtung (24, 26) für das Werkstück (28) sowie einem drehbar gelagerten Matrizenhalter (98), wobei der Stanzstempel (82) sowie die Matrize (96) wenigstens je eine gerade (A$^2$) und eine bogenförmige Schneidkante (A$^1$) aufweisen, dadurch gekennzeichnet, dass der Stanzmaschinen-Stössel (30) oder ein Teil desselben drehbar gelagert und das Stanzwerkzeug (82, 96) mittels eines automatischen Werkzeugwechslers (40) in die Werkzeugaufnahme des Stössels (30) bzw. den einzigen Matrizenhalter (38) wechselbar ist.

2. Stanzmaschine nach Anspruch 1, dadurch gekennzeichnet, dass die gerade (A$^2$) und die bogenförmige Schneidkante (A$^1$) oder gedachte Verlängerungen derselben einen spitzen Winkel einschliessen.

3. Stanzmaschine nach Anspruch 2, mit zwei winklig, insbesondere rechtwinklig, zueinander verlaufenden Schneidkanten (A$^2$, A$^4$), die über die bogenförmige (A$^1$, A$^3$) miteinander verbunden sind, dadurch gekennzeichnet, dass die bogenförmige Schneide aus wenigstens zwei Teilkanten (A$^1$, A$^3$) besteht, von denen mindestens eine (A$^3$) kreisbogenförmig ist.

## Revendications

1. Presse à découper comprenant un outil de découpage (82, 90, 96) qui présente au moins deux parties, dont les parties peuvent tourner en synchronisme autour de l'axe longitudinal de l'outil, un dispositif (24, 26) d'avance X-Y de la pièce (28) à usiner, ainsi qu'un porte-matrices (38) monté rotatif, le poinçon de découpage (82) ainsi que la matrice (96) présentant au moins, à chaque fois, une arête de coupe rectiligne (A$^2$) et curviligne (A$^1$), caractérisée par le fait que le coulisseau (30) de la presse à découper ou une partie de ce coulisseau est monté(e) à rotation, et l'outil de découpage (82, 96) est remplaçable, au moyen d'un échangeur automatique d'outillage (40), respectivement dans le logement d'outillage du coulisseau (30) ou dans l'unique porte-matrices (38).

2. Presse à découper selon la revendication 1, caractérisée par le fait que les arêtes de coupe rectiligne (A$^2$) et curviligne (A$^1$), ou bien des prolongements imaginaires de celles-ci, forment un angle aigu.

3. Presse à découper selon la revendication 2, comportant deux arêtes de coupe (A$^2$, A$^4$) qui s'étendent en formant mutuellement un angle, en particulier un angle droit, et sont reliées l'une à l'autre par l'entremise de l'arête curviligne (A$^1$, A$^3$), caractérisée par le fait que le tranchant curviligne est constitué d'au moins deux arêtes partielles (A$^1$, A$^3$) dont au moins l'une (A$^3$) est conformée en arc de cercle.

## Claims

1. Punching press with a punching tool with at least two parts (82, 90, 96), the parts of which are rotatable synchronously around the longitudinal axis of the tool and with an X-Y-displacement device (24, 26) for the tool (28) and also a pivotally mounted matrix support (38), wherein the punch (82) and also the matrix (96) have at least one straight (A$^2$) and one curved (A$^1$) cutting edge, characterised in that the punching press ram (30) or a part thereof is rotatably mounted and the punching tool (82, 96) is changeable by means of an automatic tool changer (40).

2. Punching press according to Claim 1, characterised in that the straight (A$^2$) and curved (A$^2$) cutting edges or imaginary extension thereof form an acute angle.

3. Punching press according to Claim 2, with two cutting edges extending at an angle relative to each other, in particular a right angle (A$^2$, A$^4$), which are connected to each other by a curved cutting edge (A$^1$, A$^3$), characterised in that the curved cutting edge comprises at least two partial edges (A$^1$, A$^3$) of which at least one (A$^3$) is arcuate.

1/8

CONTROL CONSOLE

200

FIG. I

2/8

FIG. 2

FIG. 3

EP 0 178 640 B1

3/8

FIG. 4

76

104

108

106

82

L

FIG. 6

110

96

FIG. 5

76

104

106

108

FIG. 8

$A^1$

$S^1$

$A^3$

$S^3$

W

$S^4$

$A^2$

$S^2$

$A^4$

L

FIG. 7

$A^3$

$S^3$

W

$S^1$

$A^1$

$A^2$

$S^2$

11

4/8.

FIG. 9

FIG. 10

FIG. 11

FIG. 12

FIG. 13

FIG. 14

FIG. 15

5/8

FIG. 16

6/8

PART

SCRAP

*FIG. 17*

7/8

FIG. 18b

FIG. 18a

FIG. 19c

FIG. 19b

FIG. 19a

*FIG. 21*

*FIG. 20*